# EUROPÄISCHE PATENTANMELDUNG

(11) **EP 0 594 067 A1**
(43) Veröffentlichungstag der Anmeldung: **27.04.1994**
(21) Anmeldenummer: 93116667.2
(22) Anmeldetag: 15.10.1993
(51) Int. Cl.: G01B 3/00

(54) **Längenmessmaschine**

(30) Priorität: 20.10.1992 DE 4235365
(71) Anmelder: CARL MAHR GMBH & CO., D-73730 Esslingen (DE)
(72) Erfinder: Horst, Donat, Dr., D-73728 Esslingen (DE)
(74) Vertreter: Rüger, Rudolf, Dr.-Ing.

(57) **Zusammenfassung**

Eine Meßmaschine weist einen beweglichen Meßschlitten auf, in dem eine Trägerplatte (26), an der eine Meßpinole (8) befestigt ist, mit Hilfe von Blattfedern (29, 32) pendelnd aufgehängt ist. Die Lage der Meßpinole (8) gegenüber einem festen Bezugspunkt auf dem Grundbett (3) wird mit Hilfe eines Laserinterferometer (12) ermittelt.

Zum Erzeugen einer vorgegebenen Antastkraft ist eine weitere Blattfeder (45) vorgesehen, die an der Trägerplatte (26) befestigt ist und deren freies Ende spielfrei zwischen zwei Anschlägen (52) geführt ist. Die erzeugte Antastkraft wird mit Hilfe eines Wegmeßgebers (53) erzeugt, dessen Ausgangssignal der Antastkraft proportional ist. Um eine weitere höhere Antastkraft zu erzeugen, sind zwei weitere Federeinrichtungen (59) vorgesehen, deren freie Enden mit Spiel zwischen den zugehörigen Anschlägen bewegbar sind, so daß erst beim Überschreiten eines vorgegebenen Auslenkwegs der Trägerplatte (26) die zweite Federeinrichtung (59) wirksam wird und eine erhöhte Antastkraft erzeugt.

## Beschreibung

Die Erfindung betrifft eine Längenmeßmaschine mit hoher Meßgenauigkeit.

Aus der Praxis ist eine Längenmeßmaschine bekannt, die ein Grundbett aufweist, auf dem ein Meßschlitten längsverschieblich gelagert ist. Der Meßschlitten kann längs des Grundbettes mit Hilfe eines Spindeltriebs von Hand verstellt werden und er trägt eine Meßpinole, die mit ihrem eine Meßfläche tragenden Stirnende aus dem Meßschlitten herausragt. Die Meßpinole selbst steckt in einem in dem Meßschlitten befindlichen Halter und kann durch einen Feintrieb relativ zu dem Meßschlitten fein verstellt werden.

Außerdem sitzt auf dem Grundbett ortsunveränderlich ein Lagerbock für eine zweite Meßpinole, die in Richtung parallel zu der Achse des Meßschlittens in dem Lagerbock reibungsarm verstellbar ist.

Um den Abstand zwischen der Meßfläche, der Meßpinole in dem Schlitten und der Meßpinole, die in dem Lagerbock sitzt, zu erfassen, ist ein inkrementales Wegmeßsystem vorgesehen, dessen Maßverkörperung am Grundbett angebracht ist und mit dessen Hilfe unmittelbar die Bewegung der Meßpinole in dem beweglichen Schlitten ermittelt wird.

Bei hochgenauen Messungen muß der Prüfling oder das Meßobjekt mit einer definierten Meßkraft angetastet werden. Beispiele für solche Messungen sind das Vermessen von Lehrdornen, Lehrringen oder ähnlich genauen Werkstücken. Die erforderliche genaue Meßkraft wird bei der bekannten Längenmeßmaschine mittels eines Gewichtes erzeugt, das über ein Hebelgetriebe auf die beweglich gelagerte Meßpinole einwirkt. Die hierdurch zustandekommende Relativbewegung zwischen der Meßpinole und dem Lagerbock bzw. dem Grundbett wird mit Hilfe eines induktiven Längenmeßgebers ermittelt, so daß sich der Abstand zwischen den Meßflächen aus der Auslenkung der beweglich gelagerten Meßpinole und der Verstellung des verschieblichen Schlittens und der Feineinstellung der anderen Meßpinole, die während des Meßvorgangs starr ist, ergibt. Deswegen müssen bei der Abstandsermittlung sowohl die Meßwerte des induktiven Meßwertgebers als auch die des inkrementalen Wegmeßsystems miteinander verknüpft werden. Wegen der beiden Systemen innewohnenden systematischen und zufälligen Fehler wird hierdurch die Gesamtmeßgenauigkeit der Meßmaschine auf Werte festgelegt, die ungünstiger sind als es jedem einzelnen Meßsystem entspricht.

Wegen des verwendeten Hebelgetriebes in Kombination mit dem Gewicht ändert sich bei der Antastung in komplizierter Weise die Meßkraft, weil bei der Verschwenkung der Hebel deren wirksame Hebellängen geändert werden. Somit ist die Meßkraft in schwer erfaßbarer Weise von der Auslenkung der beweglich gelagerten Meßpinole abhängig.

Die Verwendung eines Gewichtes zum Erzeugen der Meßkraft führt schließlich dazu, daß die Meßmaschine auf Innen- oder Außenmessung umgestellt werden muß, denn im einen Fall müssen die beiden Meßflächen aufeinander zu vorgespannt werden, also die beweglich gelagerte Meßpinole eine Druckkraft erzeugen, während bei Innenmessungen mit entsprechend gestalteten Meßschnäbeln, eine Zugkraft hervorgerufen werden muß.

Mit der bekannten Meßmaschine kann darüber hinaus ohne Auswechseln des Gewichtes keine nennenswert andere Antastkraft erzeugt werden. Bestimmte Messungen bzw. bestimmte ausländische Normen sehen andere Meßkräfte vor, was bei der bekannten Meßmaschine ein umständliches Umrüsten zur Folge hat.

Ausgehend hiervon ist es Aufgabe der Erfindung, eine Längenmeßmaschine zu schaffen, die es gestattet, ohne Umrüstung unterschiedliche Meßkräfte zu erzeugen.

Die Verwendung zweier unterschiedlicher Vorspanneinrichtungen in Verbindung mit einer wegabhängigen Kupplungseinrichtung für die zweite Vorspanneinrichtung gestattet es, die Meßkraft durch den Vorschub des betreffenden Meßschlittens zu steuern. Je nachdem, wie groß der Versatz des Gehäuses des Meßschlittens gegenüber der Meßpinole ist, ergeben sich unterschiedliche Antastkräfte. So kann beispielsweise in dem ersten, sich unmittelbar an die Ruhelage anschließenden Bereich mit einer flachen Federkennlinie und folglich mit geringer Antastkraft gemessen werden, während im Anschluß daran die Messung mit einer steilen Federkennlinie erfolgt.

Solche Messungen werden beispielsweise benötigt, wenn es darum geht, die Verformung des Prüflings festzustellen.

Wenn in den Vorspanneinrichtungen Blattfedern verwendet werden, läßt sich auf einfache Weise sicherstellen, daß mit Hilfe der Meßpinole sowohl Zug- als auch Druckkräfte erzeugt werden können, um sowohl Außen- wie Innenmessungen durchzuführen, wobei der betragsmäßige Meßkraftzuwachs, bezogen auf die Auslenkung, in beiden Richtungen gleich ist.

Die wegabhängige Kupplungseinrichtung besteht im einfachsten Falle in einem beweglichen Glied und einem zusammenwirkenden Anschlagglied, wobei in der Ruhestellung der Meßpinole das bewegliche Glied sich im Abstand zu dem Anschlaglied befindet und diese beiden Glieder in dem Kraftweg liegen, der von der Meßpinole über die zweite Vorspanneinrichtung zu dem Gehäuse des Meßschlittens führt.

Auch diese Anordnung kann symmetrisch getroffen werden, so daß in beiden Richtungen das gleiche Meßkraftverhalten erzeugt wird.

Wenn noch ein dritter Meßbereich hinzukommen soll, der wiederum eine flachere Federkennlinie aufweist, die sich jedoch in einem Bereich mit erhöhter Antastkraft befindet, so kann das oder die Anschlagglieder, die mit dem beweglichen Glied zusammenwirken, ihrerseits nachgiebig ausgeführt werden. Im einfachsten Falle sitzen sie hierzu auf Hebeln od.dgl., die mit Hilfe einer vorzugsweise gemeinsamen Feder in eine formschlüssige Anschlagposition vorgespannt sind. Dadurch wird erreicht, daß, solange die Antastkraft unterhalb der Vorspannkraft für die formschlüssigen Anschläge liegt, die harte Federkennlinie wirksam ist, während bei einer Überschreitung einer festgelegten Meßkraftgrenze die formschlüssige Anlage der Anschlagglieder überwunden wird und von da ab mit einer Meßkraft gemessen wird, die der Kennlinie jener Feder entspricht, die die Vorspannung für die Anschlagglieder erzeugt.

Im übrigen sind Weiterbildungen der Erfindung Gegenstand von Unteransprüchen.

In der Zeichnung ist ein Ausführungsbeispiel des Gegenstandes der Erfindung dargestellt. Es zeigen jeweils in stark schematisierter Form:
- Fig. 1: eine Längenmeßmaschine in einer Seitenansicht,
- Fig. 2: den beweglichen Meßschlitten der Längenmeßmaschine nach Fig. 1, in einem Längsschnitt,

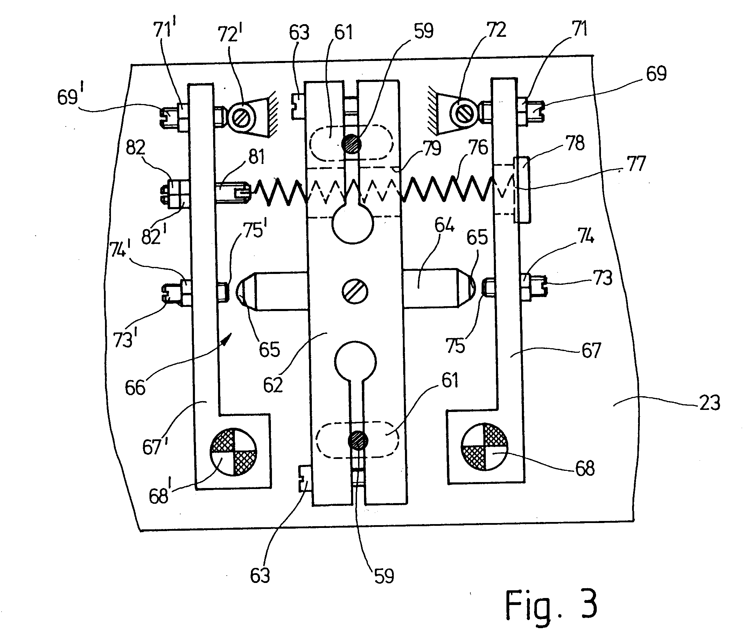

- Fig. 3: die Anordnung zum Erzeugen einer weiteren höheren Antastkraft mit Hilfe des Meßschlittens nach Fig. 2 und
- Fig. 4: in einem Diagramm den Verlauf der Antastkraft des Meßschlittens nach Fig. 2.

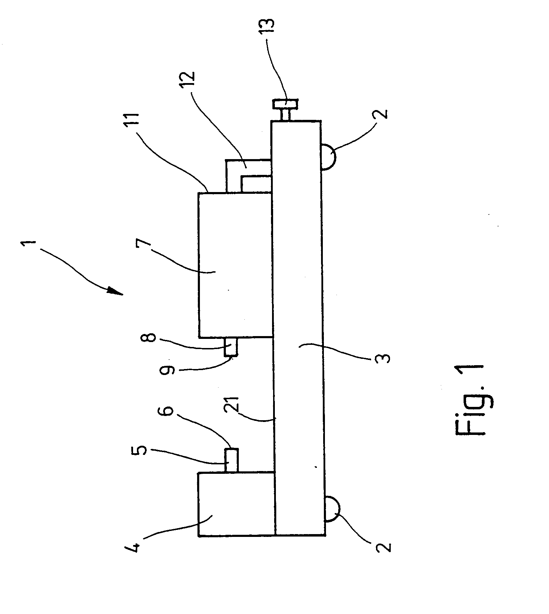

Die Längenmeßmaschine 1 nach Fig. 1 weist ein auf Füße 2 aufgestelltes längliches Grundbett 3 auf, an dessen einem Ende ein Halter 4 für eine ortsunveränderliche Meßpinole 5 starr auf dem Grundbett 3 befestigt ist. Die Meßpinole 5 weist eine von dem Halter 4 weg weisende plane Meßfläche 6 auf.

Der Meßfläche 6 gegenüber ist auf dem Grundbett 3 ein Meßschlitten 7 reibungsarm längsverschieblich geführt, in dem eine weitere Meßpinole 8 mit einer an ihrer Stirnfläche ausgebildeten Meßfläche 9 reibungsarm beweglich gelagert ist. Die Bewegungsrichtung der Meßpinole 8 ist angenähert eine Gerade, die auf den Meßflächen 6 und 9 senkrecht steht bzw. zu dem Grundbett 3 parallel liegt.

In eine Rückseite 11 des Meßschlittens 7 führt ein Rohr eines schematisch angedeuteten Laserinterferometers, das dazu dient, ohne Verwendung weiterer Meßwertaufnehmer den Abstand zwischen den beiden Meßflächen 6 und 9 zu ermitteln. Die elektronischen Steuer- und Auswerteeinheiten, die im Zusammenhang mit derartigen Laserinterferometern verwendet werden, sind bekannt und brauchen deswegen an dieser Stelle nicht erläutert zu werden, da ihre Funktion für das Verständnis der Erfindung keine Bedeutung hat.

Der bewegliche Meßschlitten 7 kann mit Hilfe einer Schraubspindel, die in dem Grundbett 3 drehbar gelagert ist, in Richtung auf die Meßfläche 6 zu bzw. von dieser weg verstellt werden. Die Betätigung der Schraubspindel kann entweder automatisiert über Stellmotoren oder über eine Handkurbel 13 erfolgen.

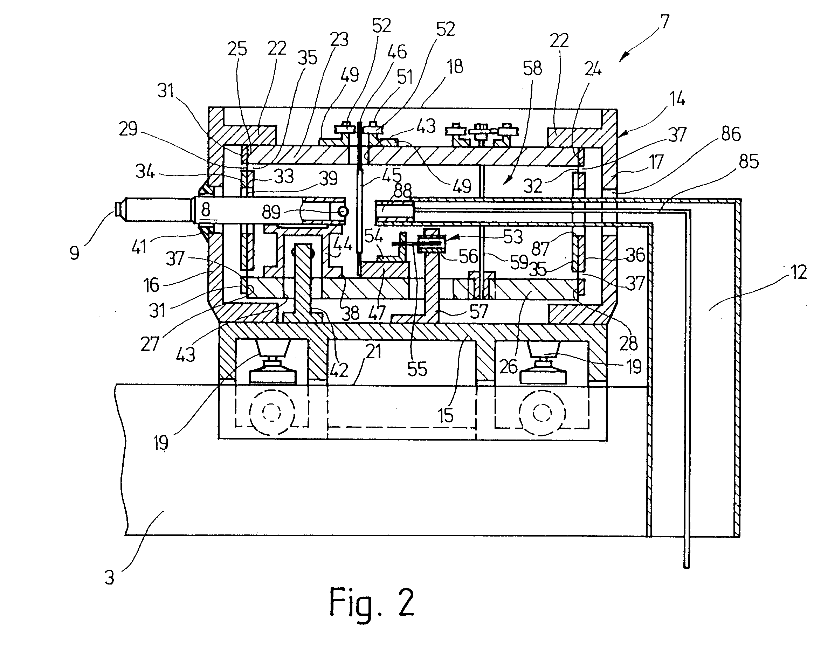

Der Meßschlitten 7 ist in Fig. 2 im Längsschnitt schematisiert veranschaulicht, wobei der Übersichtlichkeit halber Befestigungsmittel, wie Schrauben u.dgl., weitgehend weggelassen sind, um das Wesen der Erfindung besser erkennen zu können.

Der Meßschlitten 7 umfaßt ein im wesentlichen quaderförmiges Gehäuse 14, das von einer Bodenplatte 15, zwei an der Bodenplatte 15 befestigten Stirnwänden 16 und 17 sowie einer oberen Abdeckung 18 begrenzt ist; die Seitenwände zwischen den Stirnwänden 16 und 17 sind aus Darstellungsgründen nicht erkennbar.

An der Unterseite der Bodenplatte 15 sind drei aerostatische Luftlager 19 vorhanden, mit deren Hilfe der Meßschlitten 7 auf einer planen Oberfläche 21 des Grundbetts 3 praktisch reibungsfrei längsverschieblich gelagert ist. Die Seitenführung schieht in bekannter Weise.

Die beiden Stirnwände 16 und 17 sind in der Nähe der oberen Abdeckung 18 mit zwei Rippen 22 versehen, die an ihrer Unterseite eine Montagefläche für eine daran befestigte Montageplatte 23 bilden. Die Montagefläche der beiden Leisten 22 haben denselben Abstand von der als Führungsfläche dienenden Oberseite 21 des Grundbettes 3, d.h. sie liegen in einer zu dieser Führungsfläche 21 parallelen Ebene. Die Montageplatte 23 ist eine im wesentlichen rechteckige Platte mit zwei senkrecht zu der Führungsfläche 21 verlaufenden Stirnflächen 24 und 25, die parallel und im Abstand zueinander verlaufen. An der Montageplatte 23 ist eine Trägerplatte 26 pendelnd aufgehängt. Die Trägerplatte 26 ist ebenfalls im wesentlichen eine rechteckige Platte mit zwei parallel im Abstand zueinander verlaufenden Stirnseiten 27 und 28. Zur pendelnden Aufhängung der Trägerplatte 26 dient eine erste Blattfeder 29, deren Breite etwa der Länge der Stirnseite 25, gemessen senkrecht zur Zeichebene, entspricht und die an der Stirnseite 25 der Montageplatte 23 und der Stirnseite 27 der Trägerplatte 26 befestigt ist. Die Befestigung erfolgt in bekannter Weise mit Schrauben und Andruckleisten 31. Eine zweite, ähnlich gestaltete Blattfeder 32 verbindet die Stirnseite 24 mit der Stirnseite 28. Damit sich die beiden Blattfedern 29 und 32 nicht in ihrem mittleren Bereich verbiegen können, sind beide in ihrem mittleren Bereich durch jeweils zwei aufgesetzte Platten 33 und 34 bzw. 35 und 36 nahezu biegefest versteift. Die Versteifungsplatten 33...36 sind deckungsgleich und lediglich in der Höhenerstreckung etwas kleiner als es dem Abstand zwischen der Montageplatte 23 und der Trägerplatte 26 entspricht, so daß, wie die Zeichnung erkennen läßt, jeweils neben der Montageplatte 23 und neben der Trägerplatte 26 jeweils ein kleiner Bereich 37 verbleibt, in denen die beiden Blattfedern 29 und 32 ihre Beweglichkeit behalten.

Durch diese Art der Verbindung zwischen der Montageplatte 23 und der Trägerplatte 26 entsteht eine Parallelogrammlenkeranordnung, deren Gelenke durch jene vier Abschnitte der beiden Blattfedern 29 und 32 gebildet werden, an denen die Blattfedern 29 und 32 weder durch die Befestigungsleisten 31 noch durch die Verstärkungsplatten 33...36 versteift sind. Bei der getroffenen Anordnung liegen diese Abschnitte, die den Spalten 37 entsprechen, an den Eckpunkten eines Rechtecks, dessen lange Seiten zu der Führungsfläche 21 parallel liegen.

Auf der Oberseite der Trägerplatte 26 befindet sich ein Pinolensitz 38, auf dem die Meßpinole 8 starr befestigt ist. Die Meßpinole 8 ragt durch eine Öffnung 39 in der Blattfeder 29 sowie den zugehörigen Versteifungsplatten 33 und 34 sowie durch eine Bohrung 41 in der Stirnwand 16 nach außen. Der Pinolensitz 28 befindet sich zu diesem Zweck in der Nähe der vorderen Blattfeder 29.

Zur Wegbegrenzung ist an der Oberseite der Bodenplatte 15 ein Arm 42 befestigt, der durch eine Bohrung 43 in eine damit fluchtende Öffnung des Pinolensitzes 38 ragt. Seine Seitenwände 44 wirken mit dem Arm 42 als Hubbegrenzungselement zusammen und verhindern, daß die Trägerplatte 26 an die beiden Stirnwände 16 und 17 anschlägt. Zwecks Dämpfung kann der Arm 42, wie gezeigt, mit weichen, nachgiebigen Anschlagpuffern versehen sein.

Infolge dieser Lagerung kann sich die Trägerplatte 26 mit der daran befestigten Meßpinole 8 im wesentlichen nur längs einer geraden Achse bewegen, die auf einer Ebene senkrecht steht, die die Führungsfläche 21 rechtwinklig schneidet. Der bei der Pendelbewegung der Trägerplatte 26 auftretende Höhenversatz kann wegen der geringen in Frage kommenden Ausschläge während der Messung praktisch vernachlässigt werden.

Hinter der Meßpinole 8 befindet sich eine etwa rechteckige, in der Mitte mit einer großen Öffnung 45 versehene Blattfeder 46, die mit ihrem unteren Ende mittels einer Leiste 47 an der Oberseite der Trägerplatte 26 befestigt ist. Im entspannten Zustand verläuft die Blattfeder 45 parallel zu den Blattfedern 29 und 32 und führt mit ihrem oberen Ende durch eine entsprechende schlitzförmige Öffnung der Montageplatte 23. Oberhalb der Montageplatte 23 sind neben der schlitzförmigen Öffnung 48 zwei Befestigungswinkel 49 angebracht, in deren parallel und mit Abstand verlaufenden Schenkeln 51 insgesamt zwei Justierschrauben 52 in entsprechende Gewindebohrungen eingedreht sind. Die beiden Justierschrauben 52 sind an einem Ende ballig ausgeformt und weisen mit ihrem balligen Ende aufeinander zu. Sie sind derart justiert, daß die als Biegefeder wirkende Blattfeder 45 kräftefrei ist, wenn die Trägerplatte 26 ohne Einwirkung äußerer Fremdkräfte - von der Schwerkraft abgesehen - pendelnd in den Blattfedern 29 und 32 hängt. Außerdem sind die beiden Justierschrauben 52 so eingestellt, daß die aus einer planparallelen Platte bestehende Blattfeder 46 nahezu spielfrei zwischen den beiden Justierschrauben 52 verläuft.

Damit symmetrische Kräfteverhältnisse zustandekommen, sitzen die beiden Justierschrauben 52 symmetrisch bezüglich der oberen Kante der Blattfeder 46, die wiederum symmetrisch bezüglich der Blattfedern 29 und 32 angeordnet ist; sie braucht nicht dieselbe Breite wie diese zu haben, muß jedoch, was die Überdeckung anbelangt, zweckmäßigerweise zu diesen symmetrisch sein.

Abgesehen von der Pendelkraft infolge der pendelnd aufgehängten Trägerplatte 26 bildet die Blattfeder 46 eine Vorspanneinrichtung, die bei einer Auslenkung der Trägerplatte 26 bestrebt ist, die Trägerplatte 26 in die Ruhestellung, die in Fig. 2 gezeigt ist, zurückzuführen.

Obzwar die von der Blattfeder 46 erzeugte Rückstellkraft relativ klein ist, ist sie jedoch, verglichen mit der rücktreibenden Pendelkraft groß, so daß in erster Näherung als Rückstellkraft nur die von der Blattfeder 46 ausgeübte Kraft zu berücksichtigen ist. Diese Kraft wächst linear mit der Auslenkung der Meßpinole 8.

Damit ist das Maß der Auslenkung der Trägerplatte 26 senkrecht zu einer auf der Führungsfläche 21 senkrecht stehenden Bezugsebene, die in dem Meßschlitten 7 als ortsfest angenommen wird, proportional. Somit kann die Kraft mit Hilfe einer Wegmeßeinrichtung 53 ermittelt werden. Diese umfaßt einen an einem Haltewinkel 54, der auf der Leiste 47 sitzt, befestigten Tauchanker 55 sowie einen induktiven Aufnehmer 56, in den der Tauchanker 55 eintaucht. Aufgrund der Befestigung ist der Tauchanker 55 starr und unbeweglich mit der Trägerplatte 26 verbunden, während der induktive Aufnehmer 56 an einem Arm 57 angebracht ist, der mit der Bodenplatte 15 verbunden ist. Der Arm 57 ragt hierzu durch eine entsprechende Öffnung in der Trägerplatte 26.

Mit der insoweit erläuterten Ausgestaltung der Längenmeßmaschine kann bei brauchbaren Auslenkungen der Trägerplatte 26 und damit der Meßpinole 8 nur in einem verhältnismäßig engen Meßkraftbereich gemessen werden. Um den Meßkraftbereich zu vergrößern, ist eine zweite Vorspanneinrichtung 58 vorhanden. Diese umfaßt zwei zylindrische Biegestäbe 59, die symmetrisch beidseits der Längsachse, die durch die Längsachse der Meßpinole 8 gegeben ist, einenends in der Trägerplatte 26 verankert sind. Die zylindrischen Biegestäbe 59 verlaufen im entspannten Zustand der Blattfeder 46, die die erste Vorspanneinrichtung darstellt, und den Blattfedern 29 und 32 parallel. Sie liegen zusammen mit diesen Blattfedern 29, 32, 46 auf derselben Seite der Trägerplatte 26. Ihr oberes Ende führt durch Langlöcher 61 in der Montageplatte 23 und ist oberhalb der Montageplatte 23 in einem Balken 62 eingespannt. Der Balken 62 ist dazu von seinen beiden Enden her geschlitzt, wobei der entstandene Schlitz die zylindrischen Biegestäbe 59 aufnimmt. Mit Hilfe von durch den Balken 62 führenden Schrauben 63 wird der Schlitz zugespannt, um die Biegestäbe 59 festzuhalten. Der Balken 62 wird frei schwebend von den beiden Biegestäben 59, die ihrerseits fest in der Trägerplatte 26 sitzen, gehalten. Er liegt rechtwinklig zu der durch die Pinole 8 definierten Längsachse.

Mittig zwischen den beiden Biegestäben 59 befindet sich in einer entsprechenden Bohrung ein zylindrischer Stift 64, der an seinen beiden Stirnenden 65 konvex kalottenförmig gestaltet ist. Dieser zylindrische Stift 64 bildet einen Teil einer wegabhängigen Kupplungseinrichtung 66, die dafür sorgt, daß die zweite Vorspanneinrichtung 58 erst wirksam wird, wenn sich die Meßpinole 8 samt Trägerplatte 26 ein festgelegtes Stück aus der Ruhelage weg bewegt hat.

Neben einem Stirnende 65 ist oberhalb der Montageplatte 23 ein einarmiger Hebel 67 schwenkbar gelagert. Die Lagerachse des Hebels 67 sitzt etwa neben einem der beiden Biegestäbe 59 und ist bei 68 schematisch angedeutet. Von hier aus erstreckt sich der einarmige Hebel 67 bis in die Nähe der gegenüberliegenden Kante der Montageplatte 23 und dort enthält er in einer entsprechenden Gewindebohrung eine Einstellschraube 69, die mit Hilfe einer Mutter 71 gesichert ist. Die Einstellschraube 69 zeigt mit ihrem freien Stirnende in Richtung auf den Balken 62 und liegt an einem auf der Montageplatte 23 ortsfesten Anschlag 72 an. Der ortsfeste Anschlag 72 befindet sich somit zwischen dem einarmigen Hebel 67 und dem Balken 62.

Eine zweite Justierschraube 73 ist in eine etwa in der Mitte des Hebels 67 befindliche Gewindebohrung eingedreht und mittels einer zugehörigen Mutter 74 gekontert.

Die Einstellschraube 73 ist so justiert, daß, wenn die Einstellschraube 69 an dem ortsfesten Anschlag 72 anliegt, ihr Stirnende 75 sich in einem definierten Abstand von dem Stirnende 65 des zylindrischen Stiftes 64 befindet.

Gegenüber dem anderen, ballig konvexen Ende 65 des zylindrischen Stiftes 64 ist eine ähnliche Hebelanordnung spiegelbildlich gelagert. Die soeben gegebene Beschreibung gilt deswegen auch für den anderen Hebel, der zusammen mit seinen zugehörigen Bauteilen mit den entsprechenden Bezugszeichen versehen ist, die mit einem Apostroph ergänzt sind.

Zwischen den beiden auf der gleichen Seite der Montageplatte 23 gelagerten Hebeln 67, 67' erstreckt sich eine als Schraubenfeder ausgebildete Zugfeder 76, die mit ihrem Federauge 77 und einem hindurchführenden zylindrischen Stift 78 mit dem Hebel 67 zugfest verbunden ist. Von hier aus führt die Zugfeder 76 durch eine Bohrung 79 in dem Balken 62 hin zu dem Hebel 67' auf der anderen Seite des Balkens 62. Das andere Ende der Zugfeder 76 sitzt in einer Einstellschraube 81, die durch eine gewindelose Bohrung des Hebels 67' hindurchführt. Die Einstellung der Einstellschraube 81 geschieht mit Hilfe zweier gekonterter Muttern 82, 82'.

Die Zugfeder 76 sorgt dafür, daß die beiden Hebel 67, 67' mit einer vorgegebenen Vorspannung gegen ihre zugehörigen Anschläge 72 und 72' gezogen werden. Die Federhärte ist so gewählt, daß sie höchstens genauso groß ist wie die Federhärte der Blattfeder 46; vorzugsweise ist die Federhärte der Zugfeder 76 jedoch wesentlich kleiner. Die Federhärte der Biegestäbe 59 ist dagegen deutlich größer als die Federhärte der Blattfeder 46 oder der Zugfeder 76.

Um die Lage der Meßfläche 9 gegenüber der Meßfläche 6 zu ermitteln, dient das schematisch angedeutete Laserinterferometer 12, das mit einem abgewinkelten Rohrabschnitt 85 durch eine Öffnung 86 in der hinteren Stirnwand 17 sowie eine damit fluchtende Öffnung 87 in der Blattfeder 32 in das Gehäuse 14 des Meßschlittens 7 ragt. Ein Lichtauslaß des Laderinterferometers 12 ist bei 88 schematisch gezeigt.

Der Lichtauslaß 88 ist fluchtend mit der Rückseite der Meßpinole 8 angeordnet, in der als Reflektor eine Kugel 89 justierbar angeordnet ist.

Die insoweit beschriebene Längenmeßmaschine 1 arbeitet wie folgt:
Wenn zwischen den beiden planen Meßflächen 6 und 9 beispielsweise der Außendurchmesser eines Lehrdorns gemessen werden soll, wird der Lehrdorn, der den Prüfling darstellt, neben der Meßfläche 6 auf einem nicht veranschaulichten Tisch angeordnet. Sodann wird von Hand oder automatisch gesteuert der bewegliche Meßschlitten 7 auf die ortsfeste Meßpinole 5 zu bewegt. Dabei entfernt sich gleichzeitig die Meßpinole 8 von dem Lichtauslaß 88 des bezüglich des Grundbettes 3 ruhenden Laserinterferometers 12. Da der Abstand zwischen der Meßfläche 9 und die Lage der Meßfläche 6 durch Kalibrierung der Längenmeßmaschine 1 bekannt sind, läßt sich ohne zusätzliche Meßfehler allein mit Hilfe des Laserinterferometers 12 ständig der Abstand zwischen den beiden Meßflächen 6 und 9 ermitteln.

Solange die Meßfläche 9 noch nicht mit dem Prüfling in Berührung gekommen ist, befindet sich die Trägerplatte 26 zusammen mit der Meßpinole 8 in der Ruhestellung, in der die Blattfeder 46 entspannt ist. Gleichzeitig stehen in dieser Ruhestellung die balligen Stirnenden 65 der wegabhängigen Kupplungseinrichtung 66 mit einem kleinen Abstand von jeweils ca. 0,6 mm den beiden Stirnflächen 75 und 75' gegenüber.

Wenn nach ausreichender Zustellung des beweglichen Meßschlittens 7 schließlich die Meßfläche 9 den Prüfling berührt und gegen die Meßfläche 6 drückt, bleibt die Meßpinole 8 stehen, während das Gehäuse 14 des Meßschlittens 7 weiter auf den Prüfling zu bewegt wird. Die Folge dieser weiteren Bewegung ist eine Auslenkung der Trägerplatte 26 relativ zu dem Gehäuse 14, wodurch die Blattfeder 46 elastisch verformt wird. Da sie kinematisch zwischen dem Gehäuse 14 und der Pinole 8 angeordnet ist, erzeugt sie für die Pinole 8 eine Antastkraft, die wegen der Linearität der Federkennlinie linear mit der Auslenkung der Trägerplatte 26 ansteigt. Die Auslenkung der Trägerplatte 26 gegenüber dem Gehäuse 14 wird mit Hilfe des induktiven Wegaufnehmers 53 erfaßt und über geeignete Anzeigeeinrichtungen zur Anzeige gebracht. Dabei ist die Anzeige beispielsweise in Newton kalibriert, so daß die Bedienperson den Vorschub des Meßschlittens 7 stoppt, sobald die gewünschte Antast- oder Meßkraft erreicht ist.

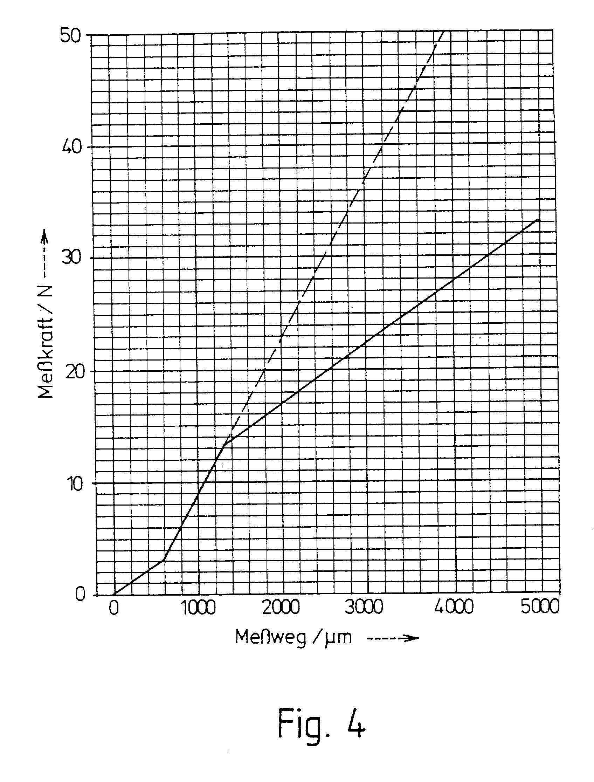

Wie Fig. 4 zeigt, steigt die Meßkraft bei der neuen Längenmeßmaschine vom Wert null in der nicht ausgelenkten Ruhestellung bis auf maximal 3 N bei einer Auslenkung von 0,6 mm an.

Selbstverständlich läßt sich der Vorschub des Meßschlittens 7 auch automatisch steuern, um bei einer gewünschten voreingestellten Meßkraft den Vorschub für den verschieblichen Meßschlitten 7 zu stoppen, die sich aus dem Ausgangssignal des induktiven Weggebers 53 ergibt, dessen Ausgangssignal zu der Meßkraft linear proportional ist.

Da während der gesamten Bewegungszeit des Meßschlittens 7 das Laserinterferometer 12 in Ruhe geblieben ist, ergibt sich eine sehr genaue Meßauflösung mit sehr kleiner Unsicherheit. Der Abstand der beiden Meßflächen 6 und 9 und damit der Durchmesser des angenommenen Meßdorns wird nur von dem Laserinterferometer 12 erfaßt, ohne daß weitere Meßeinrichtungen hinzugenommen werden. Insbesondere geschieht die Durchmesserermittlung nicht durch Hinzunahme des von dem induktiven Wegmeßaufnehmer 53 abgegebenen Signals.

Falls mit einer größeren Meßkraft als 3 N gemessen werden soll, genügt es beider neuen Längenmeßmaschine 1 den Meßschlitten 7 weiter in Richtung auf den Prüfling zu verstellen. Bei einer Auslenkung von 0,6 mm ist die entgegen der Bewegungsrichtung liegende Stirnseite 65 des zylindrischen Stiftes 64 mit der zugehörigen Stirnfläche entweder 75 oder 75' in Berührung gekommen. Der Balken 62, der sich vorher völlig kräftefrei zwischen den Stirnenden 75 und 75' bewegen konnte, wird nun aufgehalten, wodurch die Biegestäbe 59 aktiv werden. Der Blattfeder 46 wird somit, gesteuert durch die wegabhängige Kupplungseinrichtung 66, eine weitere härtere Feder parallelgeschaltet. In dem Kraftdiagramm nach Fig. 4 ist dies der Bereich der Kennlinie, der bei Auslenkungen größer 0,6 mm beginnt. Ersichtlicherweise läßt sich mit der neuen Meßmaschine innerhalb eines sehr kurzen Weges eine weitere, deutlich größere Meßkraft erreichen, denn, wie Fig. 4 zeigt, steigt die Meßkraft im Bereich zwischen etwa 0,6 mm bis ca. 1,3 mm von 3 N auf 13 N an. Derselbe Verstellweg von 0,6 mm, der vorher zu einem Meßkraftanstieg von 0 auf 3 N geführt hat, erzeugt nun eine ca. drei Mal größere Meßkraft.

Ohne zusätzliche Maßnahmen würde, wie die gestrichelte Linie aus Fig. 4 erkennen läßt, die Meßkraft mit der Federkennlinie der zusätzlich wirksamen Biegefedern 59 unerwünscht steil ansteigen. Dieser steile Anstieg wird durch die Zugfeder 76 verhindert. Sie ist mit Hilfe der Einstellschraube 81 so justiert, daß sie bei einer Meßkraft von ca. 13 N bezüglich der Drehachse 68 oder 68' der Hebel 67 bzw. 67' ein rückdrehendes Moment erzeugt, das gerade genauso groß ist wie das Moment, das von der Biegekraft der ausgelenkten Biegestäbe 59 her rührt, die auf die Stirnfläche 75 einwirken. In dieser Situation liegen die Einstellschrauben 69 bzw. 69' mit ihren Stirnenden gerade eben mit der Kraft null an den zugehörigen Anschlägen 72 bzw. 72' an. Wird die Vorschubbewegung des Gehäuses 14 über diesen Wert hinaus fortgesetzt, beginnt sich die Feder 76 zu längen, was nunmehr einen Kraftanstieg entsprechend der Federhärte der Feder 76 zur Folge hat. Ab diesem Betriebspunkt sind nunmehr die Blattfeder 46 und die Zugfeder 76 parallelgeschaltet, denn der Hebel 67 weicht ab diesem Betriebspunkt aus, so daß die Härte der Biegestäbe 59 auf die Kennlinie oder den Kraftzuwachs keinen weiteren Einfluß mehr hat.

Mit der gezeigten Längenmeßmaschine kann ohne irgendwelche Umschaltung,die von außen zusätzlich zu betätigen ist, allein nur durch Steuerung der Vorschubbewegung des Gehäuses 7, die Antastkraft feinfühlig in drei unterschiedlichen Bereichen gesteuert werden. In einem ersten Bereich, der sich unmittelbar an die Ruhestellung anschließt, mißt die Meßmaschine mit einer geringen Antastkraft. Nach Überschreiten einer vorbestimmten Auslenkung der Trägerplatte 26 gegenüber dem Gehäuse 14 steigt die Meßkraft, verglichen mit dem vorhergehenden Bereich, steil an, so daß ein Meßverlauf mit steil ansteigender Meßkraft zustandekommt. Im daran anschließenden Bereich bei noch größerer Auslenkung wird schließlich die Federkennlinie wieder flacher, was bedeutet, daß auf einem hohen Kräfteniveau mit flacher Federkennlinie gemessen werden kann bzw. daß ein unnötiges Ansteigen der Antastkraft im Havariefall unterbleibt. Andererseits hat diese Art der Meßkraftverstellung keinen Einfluß auf die Meßgenauigkeit, denn die Relativlage zwischen dem Gehäuse 4 und der darin gelagerten Meßpinole 8 wird nur zur Kräftemessung und nicht zur Messung des Abstandes der beiden Meßflächen 6 und 9 voneinander verwendet. Die Abstandsmessung erfolgt vielmehr über das ortsunveränderliche Laserinterferometer 12, das zur Messung ausschließlich mit der Rückseite der Meßpinole 8 zusammenwirkt.

Außerdem ergibt sich aus der Beschreibung auch, daß die neuen Längenmeßmaschine ohne Umschaltung zur Messung von Innendurchmessern verwendet werden kann. Dazu brauchen die planen Meßflächen 6 und 9 lediglich gegen Meßspitzen oder Meßhaken zur Innenmessung ausgetauscht zu werden. Sowohl die Blattfeder 46 als auch die wegabhängige Kupplungseinrichtung 66 als auch die Federstäbe 59 als auch schließlich die Zugfeder 76 wirken symmetrisch insofern, als betragsmäßig dieselbe Federkennlinie, wie sie in Fig. 4 gezeigt ist, zustandekommt, wenn an der Meßpinole 8 anstelle der bei der Außenmessung auftretenden Druckkräfte Zugkräfte eingeleitet werden, sobald es um die Ermittlung eines Innendurchmessers geht. Damit können auch wiederum nur durch Steuerung der Vorschubbewegung des Meßschlittens 7 und ohne sonstige Eingriffe, abgesehen von dem Auswechseln der Meßschnäbel, variable Meßkräfte erzeugt werden, wie sie für die Innenmessung erforderlich sind.

## Patentansprüche

1. Meßmaschine (1)
mit einem Grundbett (3),
einem auf dem Grundbett (3) beweglich gelagerten Meßschlitten (7), mittels dessen eine Meßpinole (8) reibungsarm beweglich gelagert ist, die eine Meßfläche (9) trägt und gegenüber dem Meßschlitten (7) hin- und herbewegbar ist,
einer ersten Vorspanneinrichtung (46), die kinematisch zwischen der Meßpinole (8) und dem Meßschlitten (7) mit einer ersten Federkonstanten wirksam ist, derart, daß die Meßpinole (8) in Richtung auf einen zu vermessenden Gegenstand vorgespannt ist und die bei einer Auslenkung der Meßpinole (8) eine Rückstellkraft erzeugt,
einer zweiten Vorspanneinrichtung (58), die kinematisch zwischen der Meßpinole (8) und dem Meßschlitten (7) mit einer zweiten Federkonstanten wirksam ist, derart, daß die Meßpinole (8) in Richtung auf einen zu vermessenden Gegenstand vorspannbar ist und die bei einer Auslenkung der Meßpinole (8) eine zweite Meßkraft erzeugt, sowie
mit einer von dem Weg der Meßpinole (8) abhängigen Kupplungseinrichtung (66), durch die die zweite Vorspanneinrichtung (58) wirksam zu machen ist, sobald die Auslenkung der Meßpinole (8) ein vorgegebenes Maß übersteigt, und die die Wirkung der zweiten Vorspanneinrichtung (58) auf die Meßpinole (8) unterbricht, solange die Auslenkung der Meßpinole (8) kleiner als das vorgegebene Maß ist.

2. Meßmaschine nach Anspruch 1, dadurch gekennzeichnet, daß die Meßpinole (8) mittels einer Lenkeranordnung in dem Meßschlitten (7) gelagert ist.

3. Meßmaschine nach Anspruch 2, dadurch gekennzeichnet, daß zur Lagerung der Meßpinole (8) ein Träger (26) vorgesehen ist, der mittels zweier parallel und im Abstand angeordneter Lenker (29, 32) in dem Meßschlitten (7) pendelnd aufgehängt ist.

4. Meßmaschine nach Anspruch 3, dadurch gekennzeichnet, daß zwischen dem Lenker (29, 32) und dem Meßschlitten (7) bzw. dem Lenker (29, 32) und dem Träger (26) für die Meßpinole (8) Federgelenke angeordnet sind.

5. Meßmaschine nach Anspruch 3, dadurch gekennzeichnet, daß jeder Lenker und die beiden zugehörigen Federgelenke von einer durchgehenden Blattfeder (29, 32) gebildet sind, die in ihrem mittleren Bereich versteift ist, derart, daß die Biegsamkeit in dem versteiften Bereich wesentlich geringer ist als in dem unversteiften Bereich (37).

6. Meßmaschine nach Anspruch 1, dadurch gekennzeichnet, daß jede Vorspanneinrichtung (46, 58) zumindest eine Rückstellfeder (46, 59) umfaßt, die kinematisch zwischen dem Meßschlitten (7) und dem Träger (26) für die Meßpinole (8) liegt.

7. Meßmaschine nach Anspruch 1, dadurch gekennzeichnet, daß die Rückstellfeder (46) zumindest der ersten Vorspanneinrichtung eine Blattfeder ist.

8. Meßmaschine nach Anspruch 1, dadurch gekennzeichnet, daß die wegabhängige Kupplungseinrichtung (66) von einem beweglichen Glied (64) und wenigstens einem Anschlagglied (75, 75') gebildet ist, das in einer Ruhestellung der Meßpinole (8) von dem beweglichen Glied (64) beabstandet ist, und daß das bewegliche Glied (64) und das zugehörige Anschlagglied (75, 75') in dem Kraftweg liegen, der von der Meßpinole (8) über die zweite Vorspanneinrichtung (66) zu dem Meßschlitten (7) führt.

9. Meßmaschine nach Anspruch 8, dadurch gekennzeichnet, daß dem beweglichen Glied (64) ein zweites Anschlagglied (75, 75') zugeordnet ist, und daß in der Ruhestellung der Meßpinole (8) das bewegliche Glied (64) von beiden Anschlaggliedern (75, 75') beabstandet ist.

10. Meßmaschine nach Anspruch 8 oder 9, dadurch gekennzeichnet, daß das oder die Anschlagglieder (75, 75') beweglich sind und eine Ruhestellung aufweisen, daß den Anschlaggliedern (75, 75') eine dritte Vorspanneinrichtung (76) zugeordnet ist, die die Anschlagglieder (75, 75') in die Ruhestellung vorspannen, in der die Anschlagglieder (75, 75') von dem beweglichen Glied (64) in der Ruhestellung der Meßpinole (8) beabstandet sind.

11. Meßmaschine nach Anspruch 10, dadurch gekennzeichnet, daß die dritte Vorspanneinrichtung (76) eine Federkonstante aufweist, die kleiner ist als die Federkonstante der zweiten Vorspanneinrichtung (58).

12. Meßmaschine nach Anspruch 10, dadurch gekennzeichnet, daß die dritte Vorspanneinrichtung (76) an den beweglichen Anschlaggliedern (75. 75') eine Vorspannkraft erzeugt, die gleich derjenigen Vorspannkraft ist, die die zweite Vorspanneinrichtung (58) am Ende eines festgelegten Weges der Pinole (8) relativ zu dem Meßschlitten (7) aufweist.

13. Meßmaschine nach Anspruch 10, dadurch gekennzeichnet, daß der oder die beweglichen Anschlagglieder (75, 75') schwenkbar gelagerte Hebel (67, 67') aufweisen, die durch eine Feder (76) in Richtung auf einen ortsfesten Anschlag (72, 72') vorgespannt sind.

14. Meßmaschine nach Anspruch 10, dadurch gekennzeichnet, daß die beweglichen Anschlagglieder (75, 75') in dem Meßschlitten (7) gelagert sind.

15. Meßmaschine nach Anspruch 8, dadurch gekennzeichnet, daß das bewegliche Glied (64) an dem Ende wenigstens einer Biegefeder (59) sitzt.

16. Meßmaschine nach Anspruch 15, dadurch gekennzeichnet, daß die Biegefeder (59) an dem Träger (26) für die Pinole (8) starr befestigt ist.

17. Meßmaschine nach Anspruch 10, dadurch gekennzeichnet, daß die dritte Vorspanneinrichtung eine Schraubenfeder (76) umfaßt, mit der beide beweglichen Anschlagglieder (75, 75') in die Ruhestellung vorgespannt sind, aus der sie nur unter Überwindung der Vorspannkraft herausbewegbar sind.
